(19) Europäisches Patentamt
European Patent Office
Office européen des brevets

(11) **EP 2 386 139 B1**

(12) **EUROPÄISCHE PATENTSCHRIFT**

(45) Veröffentlichungstag und Bekanntmachung des Hinweises auf die Patenterteilung:
**24.05.2017 Patentblatt 2017/21**

(21) Anmeldenummer: **09799338.0**

(22) Anmeldetag: **18.12.2009**

(51) Int Cl.:
*H02P 1/02* (2006.01)    *H02P 1/24* (2006.01)
*B60L 3/00* (2006.01)    *H02H 7/08* (2006.01)

(86) Internationale Anmeldenummer:
**PCT/EP2009/067487**

(87) Internationale Veröffentlichungsnummer:
**WO 2010/079082 (15.07.2010 Gazette 2010/28)**

(54) **VERFAHREN UND VORRICHTUNG ZUR ÜBERWACHUNG DES ANLAUFS EINES ELEKTRISCHEN ANTRIEBS**

METHOD AND DEVICE FOR MONITORING THE STARTUP OF AN ELECTRICAL DRIVE

PROCÉDÉ ET DISPOSITIF POUR SURVEILLER LE DÉMARRAGE D'UN ENTRAÎNEMENT ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.01.2009 DE 102009000120**

(43) Veröffentlichungstag der Anmeldung:
**16.11.2011 Patentblatt 2011/46**

(73) Patentinhaber: **Robert Bosch GmbH**
**70442 Stuttgart (DE)**

(72) Erfinder: **EISENHARDT, Martin**
**71272 Renningen (DE)**

(56) Entgegenhaltungen:
**DE-A1- 19 816 046        DE-A1- 19 835 576**
**DE-A1-102005 049 070    US-A1- 2005 257 977**
**US-A1- 2008 315 909**

**Beschreibung**

Die Erfindung betrifft ein Verfahren und eine Vorrichtung zur Überwachung des Anlaufs eines elektrischen Antriebs.

Stand der Technik

In elektrischen Antrieben für Hybrid- und Elektrofahrzeuge werden heutzutage üblicherweise dreiphasige Drehfeldmaschinen eingesetzt. Im Betrieb dieser Drehfeldmaschinen werden Pulswechselrichter mit einer feldorientierten Regelung verwendet. Bei einer derartigen feldorientierten Regelung wird eine Information über die Drehzahl bzw. die Position des Rotors benötigt.

Aus der DE 10 2005 049 070 A1 sind ein Verfahren und eine Vorrichtung zur feldorientierten Regelung einer Drehfeldmaschine bekannt. Dabei wird ein Istdrehmoment der Drehfeldmaschine ermittelt, das ermittelte Istdrehmoment mit einem Solldrehmoment verglichen und bei einem Auftreten von Drehmomentabweichungen die Sollwerte für den flussbildenden Strom und den drehmomentbildenden Strom verändert, um das Istdrehmoment mit dem Solldrehmoment in Übereinstimmung zu bringen. Das Istdrehmoment wird mittels der gemessenen Phasenströme und Maschinenkonstanten der Drehfeldmaschine berechnet. Dabei wird unter anderem eine Information über die Drehzahl der Rotorwelle der Drehfeldmaschine berücksichtigt. Zur Durchführung der genannten Rechenvorgänge und zur Ansteuerung der Schaltelemente des Pulswechselrichters wird eine Steuereinheit verwendet, welche die ihr zugeführten Messsignale in Ansteuersignale für die Schaltelemente des Pulswechselrichters umsetzt.

Für die Erfassung der Position und der Drehzahl des Rotors können beispielsweise Impulsgeber eingesetzt werden, die zueinander einen definierten Winkelversatz haben und ein Impulsgeberrad abtasten. Die Positionsermittlung erfolgt durch eine Auswertung der von den Impulsgebern gelieferte Signale.

Werden aufgrund eines Fehlers beim Zusammenbau des Pulswechselrichters mit der Drehfeldmaschine Phasenleitungen oder Impulsgeberleitungen vertauscht, dann kann der Rotor trotz eines hinreichend groß eingestellten Drehmoments nicht anlaufen.

Vorteile der Erfindung

Ein Verfahren mit den im Anspruch 1 angegebenen Merkmalen weist den Vorteil auf, dass eine eventuell erfolgte Vertauschung von Phasenleitungen oder Impulsgeberleitungen durch eine Überwachung des Anlaufs des elektrischen Antriebs erkannt wird. Dies wird im Wesentlichen dadurch erreicht, dass die Steuereinheit überwacht, ob sich die Drehzahl des Rotors ausgehend von dessen Stillstand bei hinreichend großem Sollmoment in positiver Drehrichtung ändert.

Tritt diese Änderung der Drehzahl nicht auf und liegt kein Defekt des Pulswechselrichters und auch kein Defekt der Drehfeldmaschine vor, dann schließt die Steuereinheit daraus, dass entweder eine Vertauschung von Phasenleitungen oder eine Vertauschung von Impulsgeberleitungen vorliegt, leitet eine geeignete Fehlerreaktion in die Wege und hinterlegt einen Fehlereintrag in einem Fehlerspeicher.

Weitere vorteilhafte Eigenschaften der Erfindung ergeben sich aus deren nachfolgender beispielhafter Erläuterung anhand der Figuren.

Zeichnung

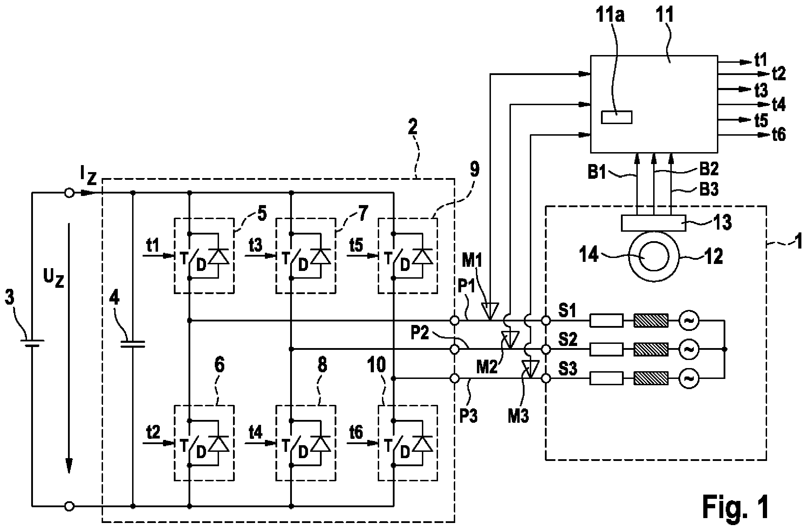

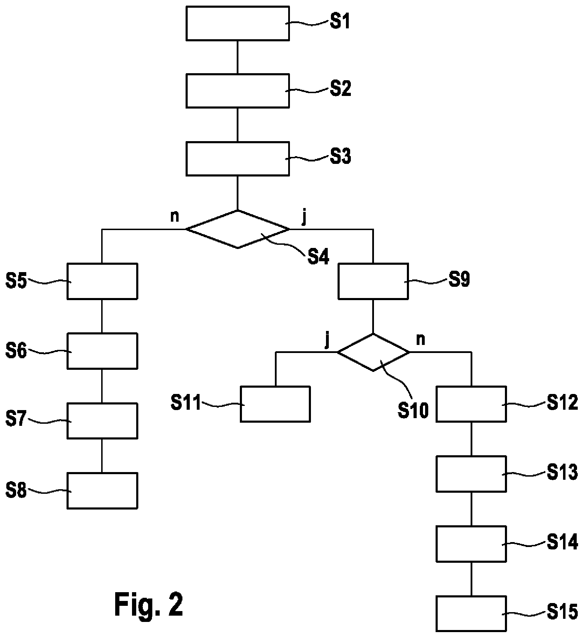

Die Figur 1 zeigt eine Skizze einer Drehfeldmaschine mit zugehörigem Leistungsteil. Die Figur 2 zeigt ein Flussdiagramm zur Erläuterung eines Verfahrens zur Überwachung des Anlaufs eines elektrischen Antriebs.

Beschreibung

Die in der Figur 1 dargestellte Drehfeldmaschine umfasst drei in Sternschaltung miteinander verbundene Antriebsstränge, die in der Figur 1 mit S1, S2, S3 bezeichnet sind.

Die Drehfeldmaschine 1 ist mit einem Pulswechselrichter 2 verbunden, der seinerseits an eine Batterie 3 angeschlossen ist. Die Batterie 3 dient zur Versorgung der elektrischen Verbraucher eines Fahrzeug-Bordnetzes, die in der Figur 1 nicht dargestellt sind.

Der Pulswechselrichter ist derart verschaltet, dass jeder der Stränge S1, S2, S3 an einen Verbindungspunkt zwischen zwei Pulswechselrichterelementen 5/6, 7/8, 9/10 angeschlossen ist und die jeweils anderen Anschlüsse der Pulswechselrichterelemente miteinander leitend verbunden sind. Die Pulswechselrichterelemente 5, 6, 7, 8, 9, 10 bestehen jeweils aus einer Parallelschaltung eines Schalttransistors T und einer Freilaufdiode D. Die Schalttransistoren der Pulswechselrichterelemente werden jeweils von einem Steuersignal t1, t2, t3, t4, t5, t6 beaufschlagt. Diese Steuersignale werden von einer Steuereinheit 11 bereitgestellt.

Weiterhin ist zwischen die jeweils anderen Anschlüsse der Pulswechselrichterelemente ein Zwischenkreiskondensator 4 geschaltet, über welchem die Zwischenkreisspannung $U_Z$ abfällt. Die beiden Anschlüsse des Zwischenkreiskondensators 4 sind mit dem Bordnetz des Fahrzeugs verbunden, von welchem in der Figur 1 die Batterie 3 dargestellt ist. Wie aus der Figur 1 weiterhin hervorgeht, fließt vom Bordnetz in den Pulswechselrichter der Zwischenkreisstrom $I_Z$.

Der Strang S1 der Drehfeldmaschine 1 ist mit dem Pulswechselrichter 2 über eine Phasenleitung P1 verbunden. Der Strang S2 der Drehfeldmaschine 1 ist mit dem Pulswechselrichter 2 über eine Phasenleitung P2 verbunden. Der Strang S3 der Drehfeldmaschine 1 ist mit dem Pulswechselrichter 2 über eine Phasenleitung P3 verbunden. An diesen Phasenleitungen P1, P2 und P3 sind Strommesser M1, M2 und M3 vorgesehen, welche Informationen über die gemessenen Phasenströme an die Steuereinheit 11 weiterleiten.

Die Drehfeldmaschine 1 weist eine Rotorwelle 14 auf, an welcher ein Impulsgeberrad 12 befestigt ist. Dieses wirkt mit einer Impulsgebersensorik 13 zusammen, welche über Impulsgeberleitungen B1, B2 und B3 mit der Steuereinheit 11 verbunden ist. Diese ermittelt unter Verwendung der ihr zugeführten Signale das Istdrehmoment der Rotorwelle, vergleicht dieses mit einem Solldrehmoment und stellt in Abhängigkeit von der ermittelten Drehmomentdifferenz die Steuersignale t1, t2, t3, t4, t5 und t6 für die Pulswechselrichterelemente 5, 6, 7, 8, 9 und 10 des Pulswechselrichters 2 zur Verfügung.

Die Steuereinheit 11 ist des Weiteren dazu vorgesehen, eine Überwachung des Anlaufs des elektrischen Antriebs vorzunehmen und dabei eine eventuell erfolgte Vertauschung der Phasenleitungen P1, P2, P3 oder der Impulsgeberleitungen B1, B2, B3 zu erkennen. Zu diesem Zweck überwacht die Steuereinheit, ob sich die Drehzahl der Rotorwelle ausgehend von einem Stillstand des Rotors bei hinreichend großem Solldrehmoment in einer vorgegebenen Drehrichtung ändert.

Dies wird nachfolgend anhand der Figur 2 näher erläutert, welche ein Flussdiagramm zur Erläuterung eines Verfahrens zur Überwachung des Anlaufs eines elektrischen Antriebs zeigt.

Im ersten Schritt S1 gibt die Steuereinheit 11 zunächst einen hinreichend großen Wert für das Solldrehmoment vor. Dann ermittelt die Steuereinheit 11 durch eine Auswertung der ihr zugeführten Messsignale für die Phasenströme und der ihr über die Impulsgeberleitungen zugeführten Signale zunächst in einem Schritt S2 die Drehzahl der Rotorwelle und danach im Schritt S3 unter Verwendung der berechneten Drehzahl das momentane Istdrehmoment nach folgender Beziehung:

$$M_{IST} = K * I_D * I_Q.$$

Anschließend vergleicht die Steuereinheit 11 in einem Schritt S4 das vorgegebene Solldrehmoment mit dem ermittelten Istdrehmoment. Ergibt dieser Vergleich, dass das Istdrehmoment dem Solldrehmoment entspricht, dann folgert die Steuereinheit daraus, dass der Pulswechselrichter 2 und die Drehfeldmaschine 1 funktional in Ordnung sind und geht zum Schritt S9 über. Im Schritt S9 vergleicht die Steuereinheit 11 zeitlich aufeinanderfolgende Drehzahlwerte miteinander. Danach erfolgt im Schritt S10 eine Abfrage. Erkennt die Steuereinheit bei dieser Abfrage, dass trotz der Fehlerfreiheit des Pulswechselrichters und der Drehfeldmaschine die Drehzahl der Rotorwelle 14 nicht ansteigt, dann geht sie zum Schritt S12 über. Gemäß diesem Schritt S12 zieht die Steuereinheit den Schluss, dass entweder eine Vertauschung von Phasenleitungen oder eine Vertauschung von Impulsgeberleitungen vorliegt.

Anschließend leitet die Steuereinheit im Schritt S13 eine geeignete Fehlerreaktion ein und hinterlegt im Schritt S14 einen zugehörigen Fehlereintrag in einem Fehlerspeicher 11a. Eine geeignete Fehlerreaktion besteht beispielsweise darin, den Pulswechselrichter abzuschalten. Der Schritt S15 stellt das Ende des Verfahrens dar.

Wird im Schritt S10 erkannt, dass aufeinanderfolgende Drehzahlwerte ansteigen, dann wird zum Schritt S11 übergegangen. Gemäß dem Schritt S11 wird der Betrieb des elektrischen Antriebs fortgesetzt.

Wird im Schritt S4 erkannt, dass das Istdrehmoment mit dem Solldrehmoment nicht übereinstimmt, dann wird zum Schritt S5 übergegangen. In diesem wird erkannt, dass ein Fehler der Drehfeldmaschine oder des Pulswechselrichters vorliegt. Daraufhin wird im Schritt S6 eine geeignete Gegenmaßnahme eingeleitet. Diese besteht beispielsweise darin, den Pulswechselrichter zu deaktivieren. Ist dies geschehen, dann erfolgt ein Übergang zum Schritt S7, gemäß welchem ein zugehöriger Eintrag in den Fehlerspeicher vorgenommen wird. Der Schritt S8 bildet das Ende des Verfahrens.

Die in der Figur 1 gezeigte Vorrichtung ist insbesondere im Zusammenhang mit Pulswechselrichter-Steuergeräten für den elektrischen Antrieb eines Hybridfahrzeugs verwendbar, kann aber auch bei anderen elektrischen Antrieben eingesetzt werden.

**Patentansprüche**

1. Verfahren zur Überwachung des Anlaufs eines elektrischen Antriebs, welcher eine Drehfeldmaschine mit einer Rotorwelle, einen mit der Drehfeldmaschine über Phasenleitungen verbundenen, Pulswechselrichterelemente aufweisenden Pulswechselrichter und eine Steuereinheit aufweist, welche zur Bereitstellung von Steuersignalen für die Pulswechselrichterelemente vorgesehen ist und über Impulsgeberleitungen mit einer Impulsgebersensorik verbunden ist, wobei die Steuereinheit ein Solldrehmoment vorgibt und das Solldrehmoment mit einem Istdrehmoment vergleicht, **dadurch gekennzeichnet, dass** die Steuereinheit (11) in der Anlaufphase des elektrischen Antriebs

   - aus ihr zugeführten Messsignalen die Drehzahl der Rotorwelle und ein Istdrehmoment berechnet und
   - bei einer Übereinstimmung des Istdrehmoments mit dem Solldrehmoment zeitlich aufeinanderfolgende Drehzahlwerte miteinander vergleicht und beim Erkennen eines Nichtansteigens der Drehzahl der Rotorwelle eine Vertauschung von Phasenleitungen oder Impulsgeberleitungen erkennt.

2. Verfahren nach Anspruch 1, **dadurch gekennzeichnet, dass** die Steuereinheit (11) nach dem Erkennen einer Vertauschung von Phasenleitungen oder Impulsgeberleitungen den Pulswechselrichter deaktiviert.

3.  Verfahren nach Anspruch 1 oder 2, **dadurch gekennzeichnet, dass** die Steuereinheit (11) nach dem Erkennen einer Vertauschung von Phasenleitungen oder Impulsgeberleitungen einen Eintrag in einen Fehlerspeicher vornimmt.

4.  Vorrichtung zu Überwachung des Anlaufs eines elektrischen Antriebs, welcher eine Drehfeldmaschine mit einer Rotorwelle, einen mit der Drehfeldmaschine über Phasenleitungen verbundenen, Pulswechselrichterelemente aufweisenden Pulswechselrichter und eine Steuereinheit aufweist, welche zur Bereitstellung von Steuersignalen für die Pulswechselrichterelemente vorgesehen ist und über Impulsgeberleitungen mit einer Impulsgebersensorik verbunden ist, **dadurch gekennzeichnet, dass** die Steuereinheit (11) derart programmiert ist, dass sie zur Durchführung eines Verfahrens nach einem der Ansprüche 1 - 3 geeignet ist.

## Claims

1.  Method for monitoring the start-up of an electric drive, which has a three-phase machine with a rotor shaft, a pulse-controlled inverter that has pulse-controlled inverter elements and is connected to the three-phase machine by means of phase lines, and a control unit that is provided to supply control signals for the pulse-controlled inverter elements and is connected to a pulse generator sensor system by means of pulse generator lines, wherein the control unit predefines a setpoint torque and compares the setpoint torque with an actual torque, **characterized in that**, in the start-up phase of the electric drive, the control unit (11)

    - calculates the speed of the rotor shaft and an actual torque from the measurement signals fed to said control unit, and
    - when the actual torque and the setpoint torque match, compares temporally successive speed values with one another and, when it is identified that the speed of the rotor shaft has not increased, identifies a transposition of phase lines or pulse generator lines.

2.  Method according to Claim 1, **characterized in that** the control unit (11) deactivates the pulse-controlled inverter after a transposition of phase lines or pulse generator lines has been identified.

3.  Method according to Claim 1 or 2, **characterized in that** the control unit (11) creates an entry in a fault memory after a transposition of phase lines or pulse generator lines has been identified.

4.  Device for monitoring the start-up of an electric drive, which has a three-phase machine with a rotor shaft, a pulse-controlled inverter that has pulse-controlled inverter elements and is connected to the three-phase machine by means of phase lines, and a control unit that is provided to supply control signals for the pulse-controlled inverter elements and is connected to a pulse generator sensor system by means of pulse generator lines, **characterized in that** the control unit (11) is programmed in such a way that it is suitable for carrying out a method according to one of Claims 1-3.

## Revendications

1.  Procédé pour surveiller le démarrage d'un entraînement électrique, comportant une machine à induction munie d'un arbre de rotor, un onduleur à impulsions comportant des éléments d'onduleur à impulsions reliés à la machine à induction par l'intermédiaire de lignes de phase et une unité de commande qui est prévue pour créer des signaux de commande destinés aux éléments d'onduleur à impulsions et est reliée par l'intermédiaire de lignes de générateur d'impulsions à un système capteur de générateur d'impulsions, dans lequel l'unité de commande prédétermine un couple de rotation théorique et compare le couple de rotation théorique à un couple de rotation réel, **caractérisé en ce que**, lors de la phase de démarrage, l'unité de commande (11)

    - calcule la vitesse de rotation de l'arbre de rotor et un couple de rotation à partir de signaux de mesure qui lui sont délivrés, et **en ce que**,
    - lors d'une concordance entre le couple de rotation réel et le couple de rotation théorique, elle compare des valeurs de la vitesse de rotation consécutives dans le temps au couple de rotation théorique et lorsque la vitesse de rotation de l'arbre de rotor n'augmente pas, elle détecte une permutation de lignes de phase ou de lignes de générateur d'impulsions.

2.  Procédé selon la revendication 1, **caractérisé en ce que** l'unité de commande (11) désactive l'onduleur à impulsions après la détection d'une permutation de lignes de phase ou de lignes de générateur d'impulsions.

3.  Procédé selon la revendication 1 ou 2, **caractérisé en ce que** l'unité de commande (11) ajoute une entrée dans une mémoire d'erreur après la détection d'une permutation de lignes de phase ou de lignes de générateur d'impulsions.

**4.** Dispositif destiné à surveiller le démarrage d'un entraînement électrique comportant une machine à induction munie d'un arbre de rotor, un onduleur à impulsions comportant des éléments d'onduleur à impulsions reliés par l'intermédiaire de lignes de phase à la machine à induction et une unité de commande qui est prévue pour créer des signaux de commande destinés aux éléments d'onduleur à impulsions et est reliée par l'intermédiaire de lignes de générateur d'impulsions à un système capteur de générateur d'impulsions, **caractérisé en ce que** l'unité de commande (11) est programmée de manière à être appropriée pour mettre en oeuvre un procédé selon l'une quelconque des revendications 1 à 3.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005049070 A1